Europäisches Patentamt

European Patent Office

Office européen des brevets

(19)

(11) **EP 0 497 532 B1**

(12)

# EUROPEAN PATENT SPECIFICATION

(45) Date of publication and mention
of the grant of the patent:
**18.12.1996 Bulletin 1996/51**

(51) Int Cl.⁶: **H04N 5/14**, H04N 5/208,
H03K 5/12

(21) Application number: **92300672.0**

(22) Date of filing: **27.01.1992**

(54) **Image enhancement system**

System zur Bildverbesserung

Système d'amélioration d'image

(84) Designated Contracting States:
**DE FR GB**

(30) Priority: **29.01.1991 JP 27877/91**
        **14.02.1991 JP 42592/91**
        **21.02.1991 JP 49086/91**
        **22.02.1991 JP 50528/91**

(43) Date of publication of application:
**05.08.1992 Bulletin 1992/32**

(73) Proprietor: **VICTOR COMPANY OF JAPAN, LTD.**
**Yokohama-Shi, Kanagawa-Ken (JP)**

(72) Inventor: **Ito, Shigehiro**
**Toride-Shi, Ibaraki-Ken (JP)**

(74) Representative: **Crawford, Andrew Birkby**
**A.A. THORNTON & CO.**
**Northumberland House**
**303-306 High Holborn**
**London WC1V 7LE (GB)**

(56) References cited:
**DE-A- 2 237 769**          **DE-A- 3 103 099**
**US-A- 4 030 121**          **US-A- 4 160 265**

**Description**

BACKGROUND OF THE INVENTION

The present invention relates to an image enhancement system suitable for use in television (TV) receivers, video tape recorders (VTR), printers and other types of video apparatus, various types of image processing apparatus used for performing the recognition, measurement, quantification, diagnosis and other operations for images, as well as various types of data communication apparatus and the like.

Portion of an image which enhances the image is often an edge portion or a portion where the density changes, and the human eye moves towards these portions. Because of this, it is possible to improve the image quality by emphasizing these portions.

Conventionally, when image quality is improved, there is the method for improving the image quality where a secondary differential signal is made from an original signal such as a TV signal and the original and the secondary differential signals are overlapped to emphasize the edge portion.

For example, in the apparatus disclosed in United States Patent Number US-A-4,030,121 (Applied on: December 2, 1975; Inventors Yves C. Faroudja), an original signal such as a TV signal is differentiated by a first differentiator to form a first differential signal and this signal is differentiated by a secondary differentiator to form a secondary differential signal. The amplitude of this secondary differential signal is limited to a constant level by a limiter.

The first differential signal undergoes full-wave rectification by a full-wave rectifier and this full-wave rectified first differential signal and the amplitude limited secondary differential signal are multiplied together by a multiplier to form the component where the edge is emphasized.

The edge-emphasized component is added to the original signal by an adder to form a TV signal where the edge is emphasized.

However, the full-wave rectified first differential signal is included as an unwanted ripple component in the edge-emphasized TV signal to distort the TV signal.

This distortion becomes a cause of deterioration of the image quality. Accordingly, with a conventional image enhancement system, if there is too much edge emphasis, the edge emphasis for imporoving the image quality conversely acts to deteriorate the image quality and it is extremely difficult to adjust the amount of the edge-emphasized component.

A conventional image enhancement system gives uniform image emphasis on all waveform portions of a TV signal owing to a lack of judging function of the waveform of the TV signal.

A secondary differential signal for edge emphasis, which is formed by a conventional image enhancement system, has a waveform involving peak signal portions situated further outside from mid points of edge portions of a TV signal. This causes preshoots or overshoots when the secondary differential signal is added to the TV signal. This results in a reproduced image the edge of which is hemmed in black and white.

A color runs on a reproduced image when the bandwidth of the color signal varies, the signal being a composite video signal modulated by a color subcarrier. In general, a secondary differential signal is added to the color signal after demodulation into a base band signal.

As a reproduced image has been highly qualified, a video apparatus, which produces a video signal having a color signal modulated by a color subcarrier and a luminance signal, both being separated from each other, has spread. An image enhancement system which gives edge emphasis directly on the color signal modulated by the color subcarrier has been awaited.

SUMMARY OF THE INVENTION

The object of the present invention is to provide a signal shaping apparatus that can add an edge-emphasized component only to an input signal without addition of an unnecessary component.

In order to attain the objective described above, the present invention provides a signal shaping apparatus that emphasizes the rise and the fall of an input signal which has signal components in a frequency bandwidth met beforehand.

The apparatus comprises first filter means for delaying by a 90° phase the signal components and outputting the 90° phase-delayed components as a first signal, wherein the closer the signal components to the upper limit frequency of the frequency bandwidth, the less the signal components are attenuated, second filter means for outputting the signal components as a second signal, wherein the closer the signal components to the upper limit frequency of the frequency bandwidth, the less the signal components are attenuated, signal composition means for performing vector composition of the first and second signals and for outputting a third signal having an amplitude which is the root of the sum of the squares of amplitudes of the first and second signals, signal shaping means for outputting a fourth signal which is said third signal being phase-reversed when the second signal is negative, signal subtraction means for sub-

EP 0 497 532 B1

tracting the second signal from the fourth signal to output rise/fall emphasis components of the input signal, and signal addition means for adding the emphasis components to the input signal to emphasize rise/fall of the input signal.

Other objects and advantages of the present invention will become apparent from the detailed description to follow taken in conjunction with the appended claims.

BRIEF DESCRIPTION OF THE DRAWINGS

FIG. 1 is a block diagram of a first preferred embodiment of a signal shaping apparatus according to the present invention;

FIG. 2 is a block diagram of main sections for signal shaping in the block diagram shown in FIG. 1;

FIG. 3 comprising FIGS. 3(a) to 3(m) is a view showing the waveform of signals that undergo signal processing in each section of the apparatus shown in FIG. 1;

FIG. 4 comprising FIGS. 4(a) to 4(f) is a view showing the frequency characteristics and impulse response of an orthogonal highpass filter and an in-phase highpass filter shown in FIGS. 1, 2, 10, 13 and 16;

FIG. 5 comprising FIGS. 5(a) and 5(b) shows two examples of circuit diagrams of a signal composer shown in FIGS. 1, 2, 10, 13 and 16;

FIG. 6 is an example of a circuit diagram of a waveform shaper shown in FIGS. 1, 2, 10, 13 and 16;

FIG. 7 shows an example of circuit diagram of a control signal generator 9 shown in FIG. 1;

FIG. 8 shows an example of circuit diagram of a switching circuit 7 shown in FIG. 1;

FIG. 9 comprising FIGS. 9(a) to 9(i) is another view showing each waveform of signals that undergo signal processing by the apparatus shown in FIG. 1;

FIG. 10 is a block diagram of a second preferred embodiment of a signal shaping apparatus according to the present invention;

FIG. 11 comprising FIGS. 11(a) and 11(b) is a view showing the input-output characteristic of a noise limiter 10 shown in FIG. 10;

FIG. 12 comprising FIGS. 12(a) to 12(k) is a view showing the waveform of signals that undergo signal processing in each section shown in FIG. 10;

FIG. 13 is a block diagram of a third preferred embodiment of a signal shaping apparatus according to the present invention;

FIG. 14 comprising FIGS. 14(a) and 14(b) is a view showing the input-output characteristics of a noise limiter 11 shown in FIG. 13;

FIG. 15 comprising FIGS. 15(a) to 15(k) is a view showing the waveform of signals that undergo signal processing in each section of the apparatus shown in FIG. 13;

FIG. 16 is a block diagram of a fourth preferred embodiment of a signal shaping apparatus according to the present invention;

FIG. 17 comprising FIGS. 17(a) to 17(p) is a view showing the waveform of signals that undergo signal processing in each section shown in FIG. 16; and

FIG. 18 is a view describing, in modeling the spectral distribution of a color signal.

DETAILED DESCRIPTION OF THE PREFERRED EMBODIMENTS

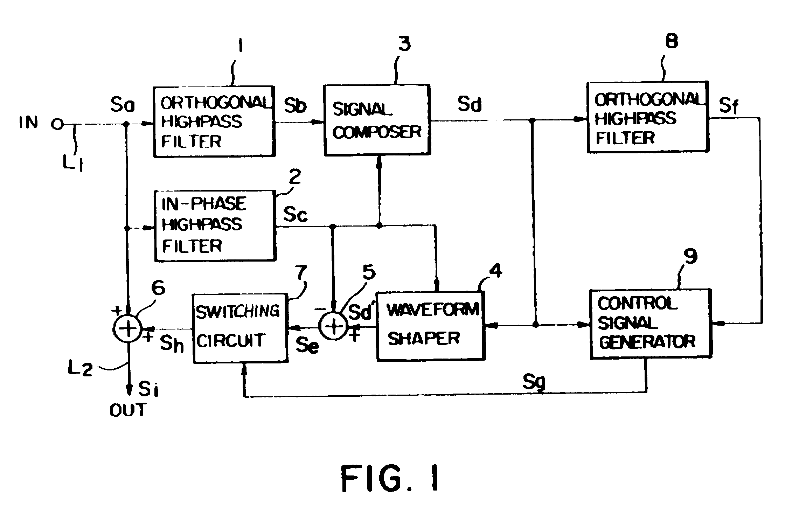

FIG. 1 is a block diagram of a first embodiment of a signal shaping apparatus according to the present invention.

This signal shaping apparatus includes an orthogonal highpass filter 1, an in-phase highpass filter 2, a signal composer 3, a waveform shaper 4, a substracter 5, an adder 6, a switching circuit 7, an orthogonal highpass filter 8 and a control signal generator 9.

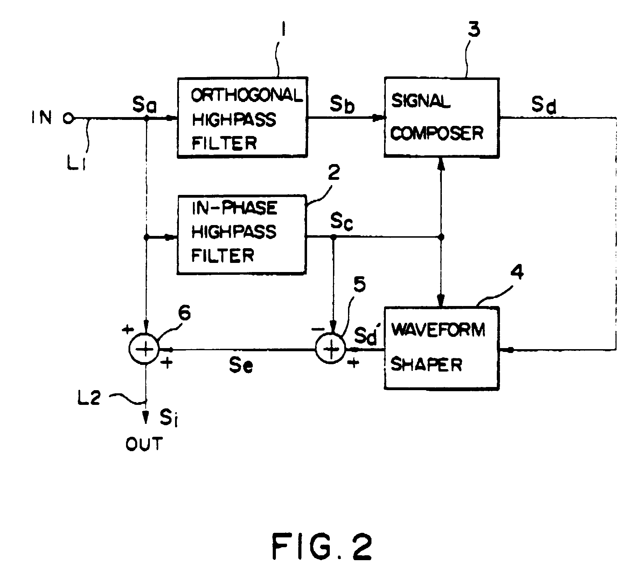

FIG. 2 is a block diagram of main sections for signal shaping in the apparatus of FIG. 1. Throughout the drawings, like reference numerals and letters are respectively used to designate like or equivalent circuit blocks and signals for the sake of simplicity of explanation. The circuit blocks fallen into the same reference numerals exhibit the same frequency characteristics which will be explained later.

For convenience of description, the description of delay in signals due to the processing time of each of the circuits and delay circuits which perform compensation for this delay is omitted. Signal waveforms to be processed by the signal shaping apparatus are described as analog signal waveforms throughout the embodiments for the sake of simplicity of explanation, a digital circuit diagram being introduced later, though.

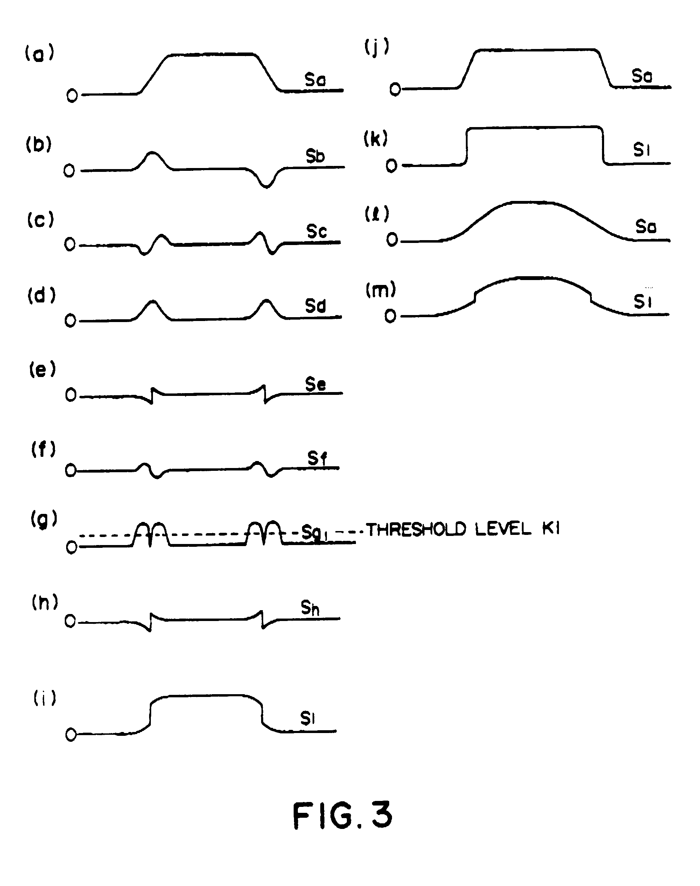

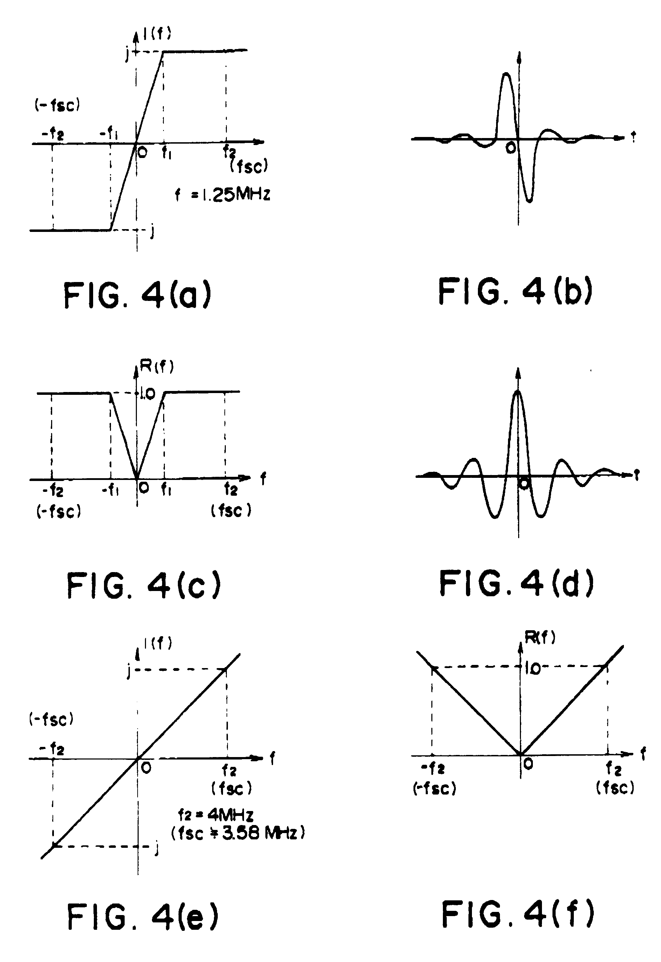

An input signal $S_a$ having a pulse waveform shown in FIG. 3(a) and coming from a line $L_1$ is supplied to the orthogonal highpass filter 1 in FIGS. 1 and 2. The characteristics of the orthogonal highpass filter 1 is shown in FIG. 4(a) and the imaginary part portion of the frequency characteristic is expressed by

3

$$I(f) = \begin{cases} j\, f/f_1 & (|f| \leq f_1, \; f_1 = 1.25 \text{ MHz}) \\ j & (f_1 < f) \\ -j & (f < -f_1) \end{cases} \qquad \cdots \qquad (1)$$

and the real part is zero.

The impulse response of the orthogonal highpass filter 1 is shown in FIG. 4(b). The impulse response has a waveform given to a signal like a TV signal band-limited by an upper limit frequency of 4 MHz. The orthogonal highpass filter 1 is of an origin-symmetrical transversal filter or the like utilizing either an analog or a digital circuit.

FIG. 3 (b) is a view showing the output signal waveform $S_b$ of the orhogonal highpass filter 1.

On the other hand, the input signal $S_a$ is also supplied to the in-phase highpass filter 2. The characteristics of the in-phase highpass filter 2 is shown in FIG. 4(c) and the real part of the frequency characteristic becomes

$$R(f) = \begin{cases} |f/f_1| & (|f| \leq f_1) \\ 1 & (f_1 < |f|) \end{cases} \qquad \cdots \qquad (2)$$

while the imaginary part is zero. The impulse response of the in-phase highpass filter 2 is shown in FIG. 4(d). The impulse response has a waveform given to a signal band-limited by an upper limit frequency of 4 MHz. The in-phase highpass filter 2 uses a transversal filter or the like that has a symmetrical coefficient value with respect to the time = 0 axis, and utilizes either an analog circuit or a digital circuit.

The orthogonal highpass filter 1 and the in-phase highpass filter 2 have the same amplitude characteristic G (f) which is

$$G(f) = \begin{cases} |f/f_1| & (|f| \leq f_1) \\ 1 & (f_1 < |f|) \end{cases} \qquad \cdots \qquad (3)$$

and the two characteristics are such that their phases are π/2 different from each other, and mutually intersecting.

The characteristics shown in FIG. 4(a) has a value in the imaginary number portion, and what has that characteristics is called an orthogonal highpass filter, while the characteristics shown in FIG. 4(c) has a value in the real number portion, and what has that characteristics is called an in-phase highpass filter.

An output signal $S_c$ of the in-phase highpass filter 2 is shown in FIG. 3(c).

Each of the output signals $S_b$ and $S_c$ of the orthogonal highpass filter 1 and the in-phase highpass filter 2 are supplied to the signal composer 3. In the signal composer 3, vector composition between the orthogonal component and the in-phase component in accordance with the following equation (4) is performed to obtain an output signal $S_d$ shown in FIG. 3(d).

$$S_d = \sqrt{S_b{}^2 + S_c{}^2} \qquad (4)$$

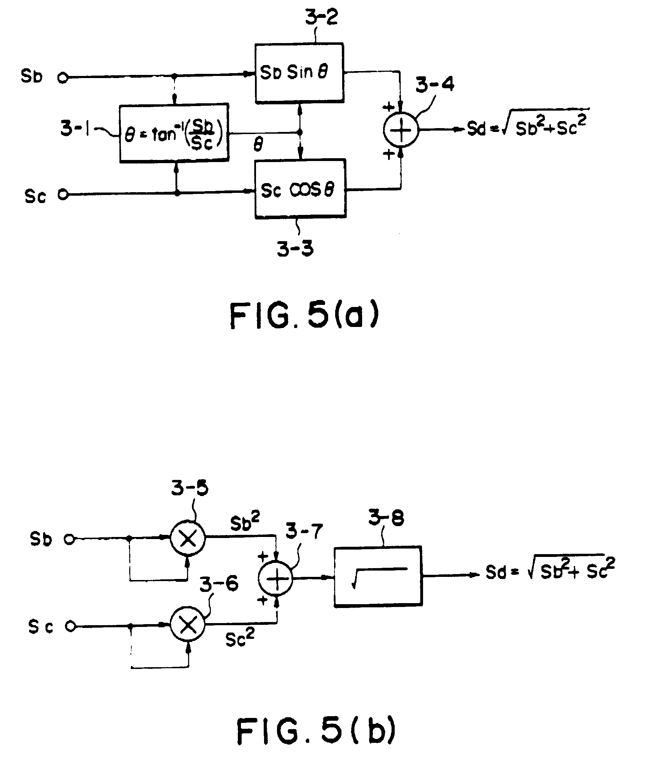

Two examples of circuit diagrams for the signal composer 3 are shown in FIGS. 5(a) and 5(b). In FIG. 5(a), an angle θ which is

$$\theta = \tan^{-1}(S_b/S_c) \qquad (5)$$

where the signals $S_b$ and $S_c$ are respectively set in axes of ordinate and abscissas, is determined by a block 3-1.

A block 3-2 determines a product of the signal $S_b$ multiplied by sinθ, that is

$$Sb * \sin\theta = S_b^2 / \sqrt{S_b^2 + S_c^2} \qquad (6)$$

Furthermore, a block 3-3 determines a product of the signal $S_c$ multiplied by $\cos\theta$, that is

$$S_c * \cos\theta = S_c^2 / \sqrt{S_b^2 + S_c^2} \qquad (7)$$

The output signal $S_d$ expressed by the equation (4) is then determined by adding the results of the equations (6) and (7) to each other by an adder 3-4.

In FIG. 5(b), $S_b^2$ and $S_c^2$ are respectively determined by multipliers 3-5 and 3-6 and are added to each other by an adder 3-7. The square root of the addition is determined by a block 3-8.

When a digital circuit is used, the signal composer 3 is realized by a circuit of table look-up type where data that has been calculated beforehand is written to a ROM or the like, and then the output of the signal composer 3 can be obtained by referring to the data.

Then, the signals $S_c$ and $S_d$ are supplied to the waveform shaper 4. Then, as described by equations (8) and (9), the waveform shaper 4 composes a signal $S_{d'}$ (not shown in FIG. 3) that reverses the polarity of the signal $S_d$ in case of a negative polarity of the signal $S_c$:

$$S_{d'} = \text{sgn}(S_c) \cdot S_d \qquad (8)$$

where sgn (x) is a function assuming +1, +1 and -1 when x is positive, zero and negative, respectively:

$$S_{d'} = \begin{cases} S_d & (0 \leq S_c) \\ -S_d & (S_c < 0) \end{cases} \qquad \cdots \qquad (9)$$

The signal $S_c$ and the signal $S_{d'}$ are supplied to the subtracter 5. Then the subtracter 5 subtracts the signal $S_c$ from the signal $S_{d'}$ in accordance with the following equation and outputs a signal $S_e$ shown in FIG. 3(e).

$$S_e = S_{d'} - S_c \qquad (10)$$

This signal $S_e$ is the edge emphasis component.

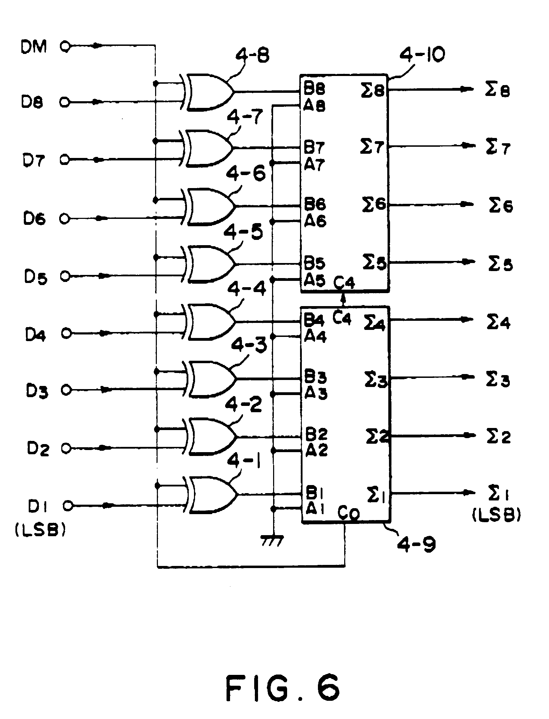

An example of the circuit diagram of the waveform shaper 4 is shown in FIG. 6, where blocks 4-1 to 4-8 are Ex-ORs (exclusive OR circuits) and blocks 4-9 and 4-10 are full adders.

Eight-bit data of $S_{d0}$ (Least Significant Bit) to $S_{d7}$ (Most Significant Bit) corresponding to the signal $S_d$ are supplied to input terminals D1 to D8 of the Ex-ORs 4-1 to 4-8, respectively. A most significant bit $S_{c7}$ of the signal $S_c$ is supplied in common to the other input terminals $D_M$.

Outputs of the Ex-ORs 4-1 to 4-8 are supplied to input terminals B1 to B4 of the full adder 4-9 and B5 to B8 of the full adder 4-10, respectively. The other input terminals A1 to A4 of the full adder 4-9 and A5 to A8 of the full adder 4-10 are all grounded. The bit $S_{c7}$ is also supplied to a carry input terminal Co of the full adder 4-9. The carry output terminal $C_4$ of the full adder 4-9 is connected to the carry input terminal $C_4$ of the full adder 4-10.

Eight-bit data of $S_{d'0}$ (Least Significant Bit) to $S_{d'7}$ (Most Significant Bit) corresponding to the signal $S_{d'}$ are outputted from output terminals 1 to 4 of the full adder 4-9 and 5 to 8 of the full adder 4-10. Processing corresponding to the equations (8) and (9) are then completed.

The adder 6 adds the edge emphasis component $S_e$ to the input signal $S_a$ and outputs a signal $S_i$ shown in FIG. 3(i). The signal $S_i$ has a waveform where its transition portions are reshaped, that is, the edge portions of the signal $S_a$ are emphasized.

In edge emphasizing operation described above, noise components are also emphasized. However, the edge portions of the signal $S_a$ only require to be emphasized, so that the edge emphasis component $S_e$ may be added to the input signal $S_a$ only when it has the edge portions. Reproductivity of the input signal $S_a$ can be improved owing to no noise emphasis.

In FIG. 1, the output signal $S_d$ of the signal composer 3 is supplied to the second orthogonal highpass filter 8 having the same frequency characteristics as that of the orthogonal highpass filter 1. A signal $S_f$ shown in FIG. 3(f) having a waveform like the signal $S_d$ being differentiated is obtained by the orthogonal highpass filter 8.

The signals $S_f$ and $S_d$ are supplied to the control signal generator 9 to determine a signal $S_{g1}$ shown in FIG. 3(g) in accordance with the following equation (11).

$$S_{g1} = |S_f|/(S_d + \varepsilon) \tag{11}$$

where $\varepsilon$ is a minute value to satisfy the following inequality (12) and is a constant for preventing overflow of the signal $S_{g1}$ when the signal $S_d$ is zero.

$$0 < \varepsilon << |S_d| \tag{12}$$

The control signal generator 9 outputs a signal $S_g$ (not shown in FIG. 3) which is expressed by the following equation (13).

$$S_g = \begin{cases} 1 & (k1 \leq S_{g1}) \\ 0 & (S_{g1} < k1) \end{cases} \tag{13}$$

It is found that the signal $S_g$ takes a value 1 or 0 in accordance with the magnitude of the signal $S_{g1}$ to a threshold level k1.

In detail, the signal $S_{g1}$ takes a value between 0 and 1 as expressed by the following inequality (14).

$$0 \leq S_{g1} \leq 1 \tag{14}$$

The signal $S_{g1}$ is compared to the threshold level k1. If the signal $S_{g1}$ is equal to or greater than k1, the control signal generator 9 judges that there is a transition portion of the input signal $S_a$ and outputs a control signal $S_g$ of "1". On the other hand, if the former is smaller than the latter, the generator 9 judges that there is no transition portion of the input signal $S_a$ and outputs the control signal $S_g$ of "0".

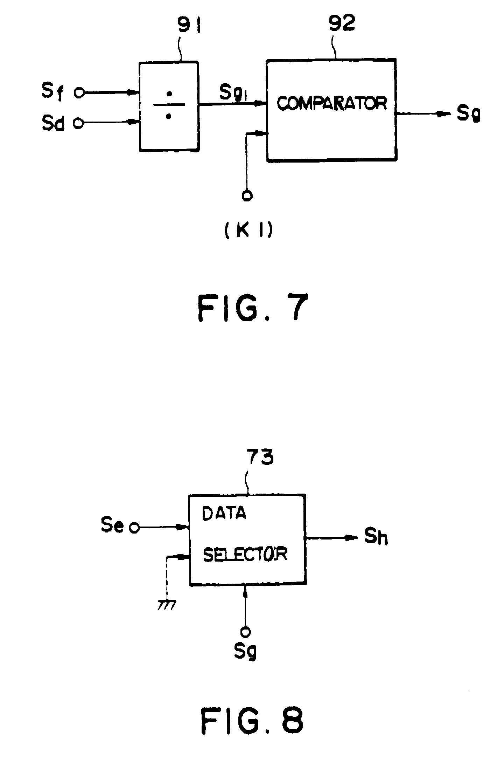

FIG. 7 shows an example of the circuit diagram of the control signal generator 9. A block 91 is a divider for performing the operation in accordance with the equation (11) when the signals $S_d$ and $S_f$ are supplied thereto. The divider is realized by a ROM of table look-up type. The output signal $S_{g1}$ of the block 91 is compared with the threshold level k1 in a block 92 which is a comparator. The block 92 then outputs the pulse-formed control signal $S_g$.

In FIG. 1, the control signal $S_g$ and the output signal $S_e$ of the subtractor 5 are supplied to the switching circuit 7. FIG. 8 shows an example of the circuit diagram of the switching circuit 7. A block 73 is a data selector an input terminal of which is supplied with the signal $S_e$ and the other grounded.

The data selector 73 outputs "0" when the control signal $S_g$ is "0", while passes therethrough the signal $S_e$ as an output signal $S_h$, when the signal $S_g$ is "1". The output signal $S_h$ is shown in FIG. 3(h). As described above, the switching circuit 7 outputs the signal $S_e$ that is the signal $S_h$ as the edge emphasis component only on the period of time where the transition portion of the input signal $S_a$ is detected as the transition portion of the signal $S_d$.

In FIG. 1, the signal $S_h$ is supplied to the adder 6 where it is added to the input signal $S_a$ to output a signal $S_i$ as shown in FIG. 3(i). As shown in FIGS. 3(a) and 3(i), the output signal $S_i$ has a waveform where the transition (edge) portions of the signal $S_a$ is adequately emphasized. The output signal $S_i$ may be reproduced to obtain an image the edge portion of which is emphasized.

According to the first embodiment and as shown in FIG. 3(i), the output signal $S_i$ does not have any preshoots or overshoots which may go beyond the amplitude of the input signal $S_a$.

The signal $S_i$ outputted from a line L2 of FIG. 1 is formed with sideband components owing to the edge emphasis. In other words, a spectrum going beyond the original bandwidth of the input signal $S_a$ is added thereto. This addition of a spectrum improves sharpness of a reproduced image.

How much the transition portions of the output signal $S_i$ are emphasized depends on the frequency characteristics of the edge portions of the input signal $S_a$ before emphasizing. The steeper the transition portions as shown in FIG. 3 (j), the more edge emphasis is performed as shown in FIG. 3(k). On the other hand, the less steep as shown in FIG. 3($\ell$), the less emphasis is performed as shown in FIG. 3(m).

As described above, the edge emphasis component added to the input signal $S_a$ depends on the frequency characteristics thereof and has correlation thereto so that this signal shaping apparatus improves the sharpness and resolution of a reproduced image without the viewer being aware of an unnaturalness.

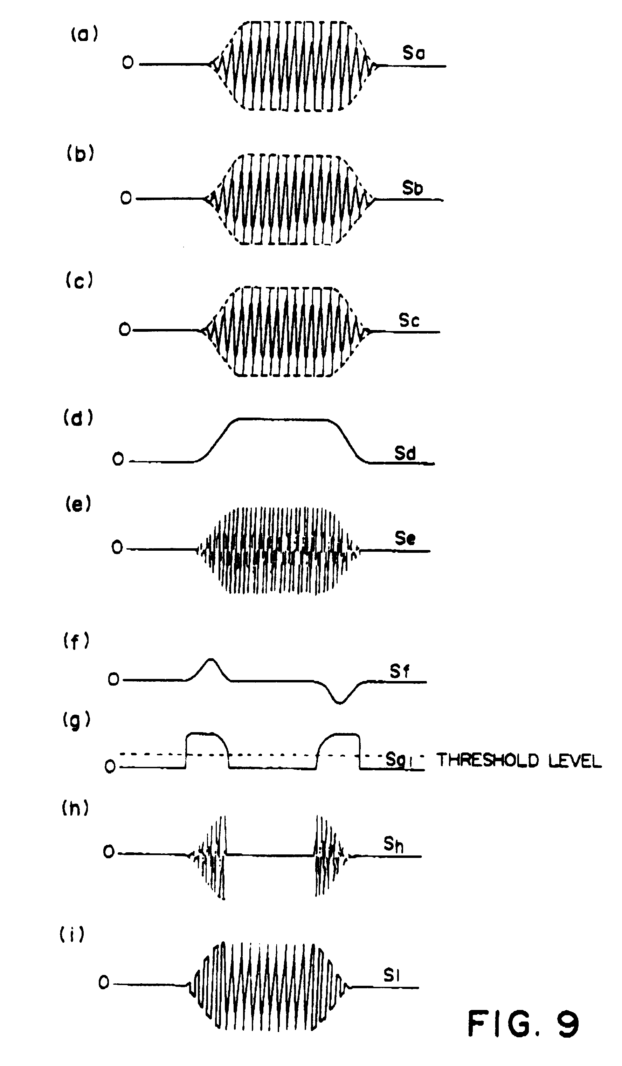

FIG. 9 shows output signal waveforms of each of the blocks of FIG. 1 when a signal being amplitude-modulated by a modulation frequency $f_2$ of 4 MHz is supplied as the input signal $S_a$ to the signal shaping apparatus of FIG. 1. The frequency of 4 MHz is an upper limit frequency in the case of a TV signal in the NTSC system.

Envelopes depicted by dot lines to FIGS. 9(a) to 9(c) have the same waveform as that of the signal $S_d$ shown in FIG. 9(d). The signal $S_e$ shown in FIG. 9(e) is the edge emphasis component of the signal $S_d$, the signal $S_h$ shown in FIG. 9(h) is the edge emphasis component outputted from the switching circuit 7 and the signal $S_i$ shown in FIG. 9(i) is the output signal of the signal shaping apparatus of FIG. 1.

As shown in the signal $S_i$, sine waves on the transition portions of the envelope are reshaped in rectangular wave and are edge-emphasized. On the other hand, the signal portions of the signal $S_i$ where modulation waves of constant amplitude exist are not edge-emphasized and maintain the waveform of the input signal $S_a$. Therefore, this signal shaping apparatus is capable of signal waveform judging so that edge enhancement can be performed only on the portions of the input signal where edge enhancement is required.

As to the frequency characteristics, that shown in FIG. 4(a) is applied to the orthogonal highpass filters 1 and 8 and that shown in FIG. 4(c) to the in-phase highpass filter 2. However, that shown in FIG. 4(e) may be applied to the orthogonal highpass filters 1 and 8 and that shown in FIG. 4(f) to the in-phase highpass filter 2.

The frequency characteristics shown in FIGS. 4(e) and 4(f) are respectively expressed by the following equations (15) and (16).

$$I\ (f)\ a= j\ f/f_2 \qquad (f_2 = 4\ \text{MHz}) \tag{15}$$

$$R\ (f) = \left| f/f_2 \right| \tag{16}$$

Furthermore, the frequency characteristics shown in FIGS. 4(a), 4(e) and 4(c) may be applied to the orthogonal highpass filter 1, orthogonal highpass filter 8 and in-phase highpass filter 2, respectively.

Band width limitation to cut signal components existing outside the band width where the input signal $S_a$ exists may be applied to the frequency characteristics shown in FIGS. (a), (c), (e) and (f). This further reduces noise components included in the input signal.

As described above, the signal shaping apparatus shown in FIG. 1 comprises the orthogonal highpass filter 1, in-phase highpass filter 2, signal composer 3, waveform shaper 4, subtractor 5 and adder 6 for edge emphasizing and the switching circuit 7, orthogonal highpass filter 8 and control signal generator 9 for waveform judging. The waveform judging can be realized by a simple circuit configuration as described before.

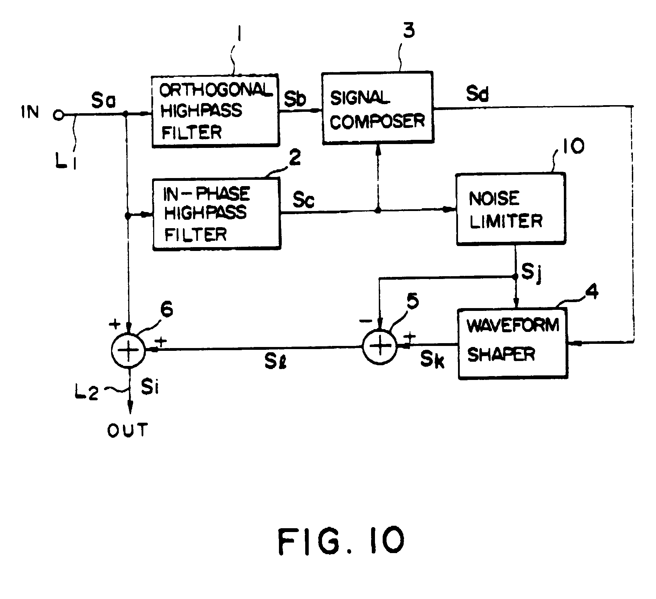

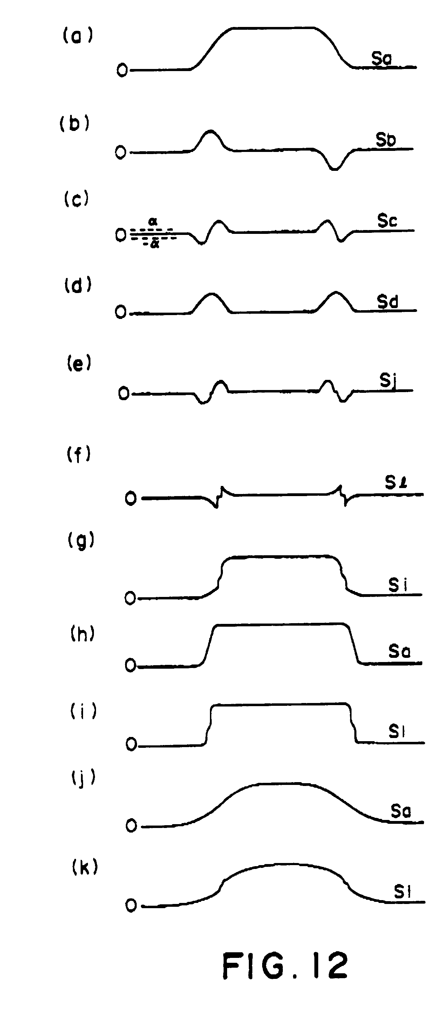

FIG. 10 shows a second preferred embodiment of the signal shaping apparatus according to the present invention. In FIG. 10, a noise limiter 10 is provided between the in-phase highpass filter 2 and waveform shaper 4. The noise limiter 10 outputs a signal $S_j$ which is subtracted from an output signal $S_k$ (not shown in FIG. 12) of the waveform shaper 4 by the subtracter 5.

Configuration and operation of the blocks in FIG. 10 except the noise limiter 10 are the same as those described with reference to FIGS. 1 and 2, so that those of the noise limiter 10 are only described in detail hereinafter.

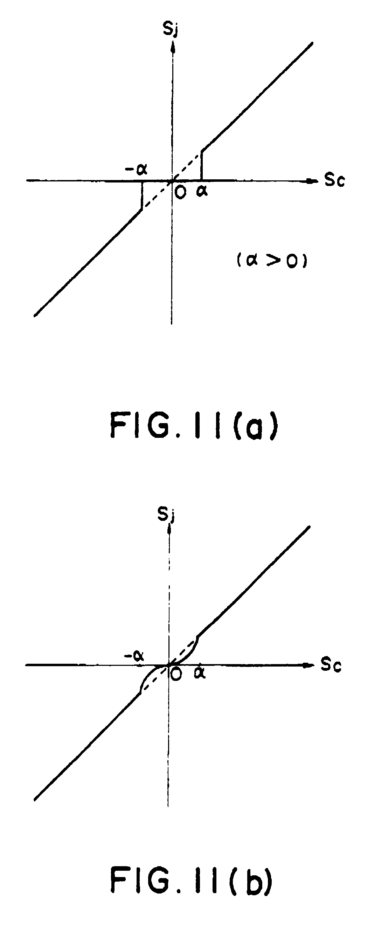

The output signal $S_c$ of the in-phase highpass filter 2 is supplied to the noise limiter 10 which outputs the signal $S_j$. An example of the input-output characteristics of the noise limiter 10 is shown in FIG. 11(a) which is expressed by the following equation.

$$S_j = \begin{cases} 0 & (|S_c| < \alpha) \\ S_c & (\alpha \leq |S_c|) \end{cases} \qquad \ldots (17)$$

It is found that the noise limiter 10 outputs no signal if the amplitude of the signal $S_c$ is smaller than $\alpha$, while passes

therethrough the signal $S_c$ as the signal $S_j$ if the former is equal to or greater than the latter.

Accordingly, noise components of the amplitude less than $\alpha$, corresponding to the signal components having the amplitude less than $\alpha$ of the signal $S_c$ can be rejected.

This results in formation of the edge emphasis components on the basis of the polarity of the output signal $S_j$ (described in detail later). To limit the noise components of small level included in the signal $S_c$ the polarity of which may be inverted by the noise components improves the quality of a reproduced image.

An actual $\alpha$ has a minute value which is in several percent to the dynamic range of the input signal $S_a$. The value $\alpha$ is depicted by dot lines in FIG. 12(c) and the output signal $S_j$ of the noise limiter 10 is shown in FIG. 12(e).

Provision of the noise limiter 10 before the waveform shaper 4 which outputs the signal $S_k$ for the edge emphasis improves the polarity-judgment of the waveform shaper 4.

FIG. 11(b) shows another example of the frequency characteristics of the noise limiter 10, which is expressed by the following equation (18).

$$S_j = \begin{cases} S_c * (S_c/\alpha)^2 & (|S_c| < \alpha) \\ S_c & (\alpha \leq |S_c|) \end{cases} \qquad \ldots (18)$$

It is found that the noise limiter 10 limits the noise components with the square-law characteristics if the amplitude of the signal $S_c$ is smaller than $\alpha$, while passes therethrough the signal $S_c$ as the signal $S_j$ if the former is equal to or greater than $\alpha$, the same as shown in FIG. 11(a).

Compared to the frequency characteristics shown in FIG. 11(a), that shown in FIG. 11(b) gives less influence of noise limitation to the waveform of the signal $S_c$. The noise limiter 10 can be realized by a ROM of table look-up type.

In FIG. 10, the output signals $S_j$ and $S_d$ are supplied to the waveform shaper 4. Then, as described by the equations (19) and (20), the waveform shaper 4 composes the signal $S_k$ with the inverse polarity of the signal $S_d$ in accordance with the polarity of the signal $S_j$.

$$S_k = \mathrm{sgn}\,(S_j) * S_d \qquad\qquad (19)$$

$$S_k = \begin{cases} S_d & (0 \leq S_j) \\ -S_d & (S_j < 0) \end{cases} \qquad \ldots \qquad (20)$$

The signal $S_j$ and $S_k$ are supplied to the subtracter 5. The subtracter 5 subtracts the signal $S_j$ from the signal $S_k$ and outputs a signal $S_\ell$ shown in FIG. 12(f) in accordance with the following equation (21).

$$S\ell = S_k - S_j \qquad\qquad (21)$$

This signal $S_\ell$ is the edge emphasis component.

The adder 6 adds the edge emphasis component to the input signal $S_a$ and outputs the signal $S_i$ shown in FIG. 12(g).

Compared to the input signal $S_a$, the waveform of the output signal $S_i$ has steps at its steep transitions corresponding to the mid portions of the transitions portions of the input signal $S_a$. This results in adequate edge emphasis. Furthermore, there is no preshoots or overshoots found in the signal $S_i$. As shown in FIGS. 12(h) to 12(k) and described before in FIGS. 3(j) to 3(m), the edge emphasis of the signal $S_i$ depends on the frequency characteristics of the edge portions of the signal $S_a$ before edge emphasizing.

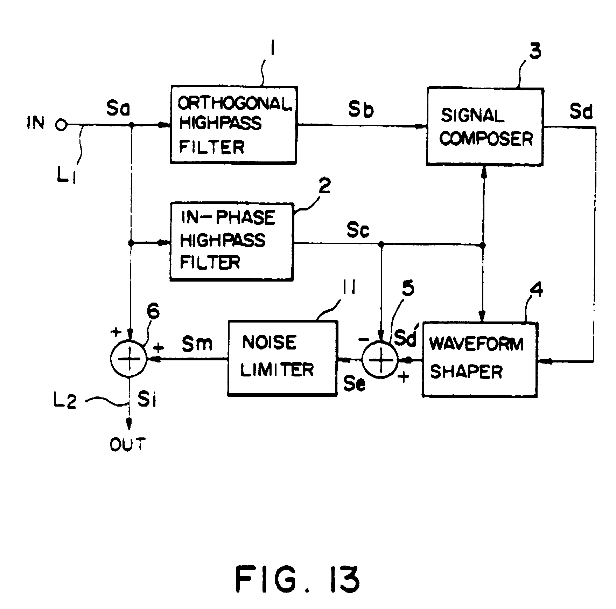

FIG. 13 shows a third preferred embodiment of the signal shaping apparatus according to the present invention. In FIG. 13, a noise limiter 11 is provided between the subtracter 5 and adder 6. The noise limiter 11 outputs a signal $S_m$ when supplied with the output signal $S_e$ of the subtractor 5.

Configuration and operation of the blocks in FIG. 13 except the noise limiter 11 are the same as those described with reference to FIGS. 1 and 2, so that those of the noise limiter 11 are only described in detail hereinafter.

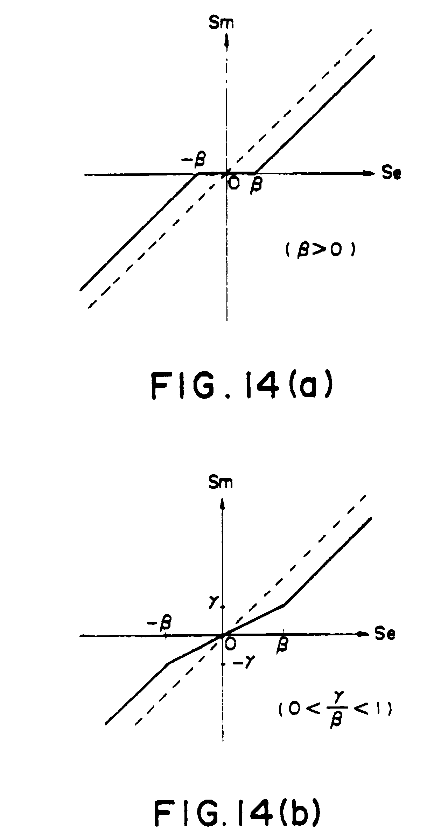

An example of the input-output characteristics of the noise limiter 11 is shown in FIG. 14(a) which is expressed by the following equation.

$$S_m = \begin{cases} 0 & (|S_e| \leq \beta) \\ S_e - \beta & (\beta < S_e) \\ S_e + \beta & (S_e < -\beta) \end{cases} \qquad \cdots (22)$$

where $\beta$ is a positive constant.

It is found that the noise limiter 11 outputs no signal if the amplitude of the signal $S_e$ is equal to or smaller than $\beta$, while outputs a signal obtained by subtracting $\beta$ from the signal $S_e$ if the former is greater than the latter. Furthermore, the limiter 11 outputs a signal obtained by adding $\beta$ to the signal $S_e$ if the amplitude of the signal $S_e$ is smaller than -$\beta$. This processing, in accordance with the frequency characteristics shown in FIG. 14(a) which is non-linear, is called threshold processing.

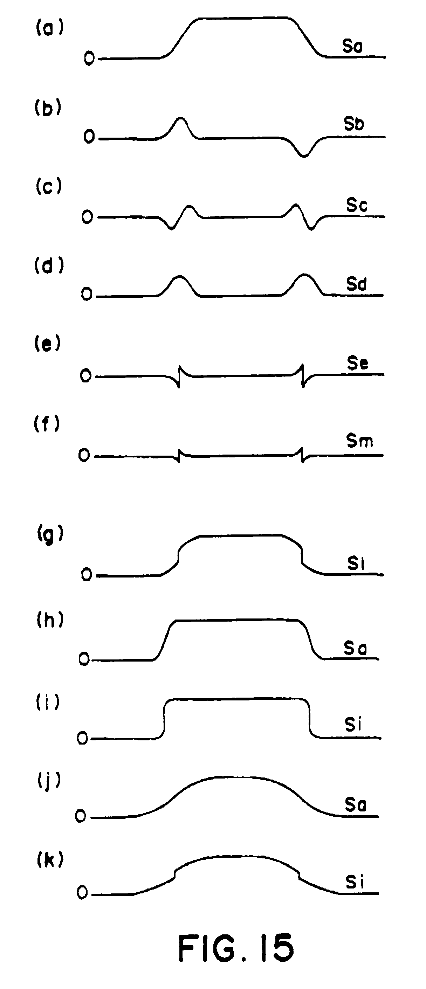

Accordingly, noise components of the amplitude less than $\beta$, corresponding to the signal components having the amplitude less than $\beta$ of the signal $S_e$ can be limited. The output signal $S_m$ of the noise limiter 11 is shown in FIG. 15(f).

An actual $\beta$ has a minute value which is in several percent to the dynamic range of the input signal $S_a$. Dot lines depicted in FIG. 14(a) shows the input-output characteristic of the noise limiter 11 if no noise limitation, for comparison with the threshold processing. The characteristic is expressed by the following equation.

$$S_m = S_e \qquad (23)$$

Provision of the noise limiter 11 next to the subtracter 5 in order to limit the noise components included in the edge emphasis component $S_e$ yields the following:

The noise components, included in the minute components which should be zero included in the edge emphasis component $S_e$, that is, the signal components added to the portions of the input signal $S_a$ where edge emphasis is not needed, are limited so that adequate edge emphasis components can be obtained.

Furthermore, as to the great amplitude portion of the edge emphasis component $S_e$ to be added to the transition portion of the input signal $S_a$, the noise limiter 11 does not work well, however the minute noise components included in the great amplitude portion are masked, so that the minute noise components scarcely influence the edge emphasis operation.

More adequate edge emphasis component can be obtained by respectively providing the noise limiters 10 and 11 in the former and latter stages of the waveform shaper 4.

FIG. 14(b) shows another example of the input-output characteristics of the noise limiter 11, which is expressed by the following equation (24),

$$S_m = \begin{cases} (\gamma/\beta)S_e & (|S_e| \leq \beta) \\ S_e - \gamma & (\beta < S_e) \\ S_e + \gamma & (S_e < -\beta) \end{cases} \qquad \cdots (24)$$

where $\beta > 0$, $\gamma > 0$ and $0 < \gamma/\beta < 1$.

The noise limiter 11 also limits the minute noise components with the characteristics shown in FIG. 14(b).

Compared to the characteristics shown in FIG. 14(a), that shown in FIG. 14(b) gives less influence of noise limitation to the waveform of the signal $S_m$. The noise limiter 11 can be realized by a ROM of table look-up type.

In FIG. 13, the output signal $S_m$ of the noise limiter 11 is supplied to the adder 6 and is added to the input signal $S_a$.

The edge emphasized output signal Si is shown in FIG. 15(g). As shown in FIGS. 15(h) to 15(k) and described before in FIGS. 3(j) to 3(m), the edge emphasis of the signal $S_i$ depends on the frequency characteristics of the portions of signal $S_a$ before edge emphasizing.

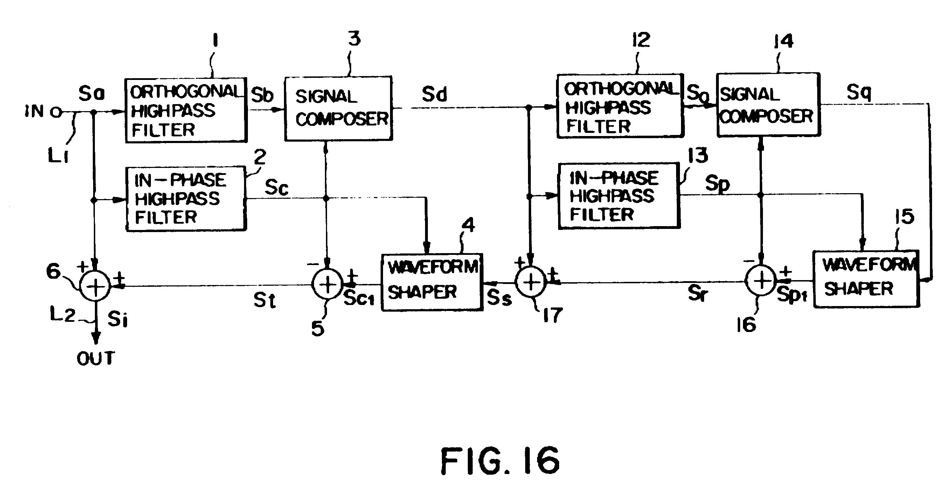

FIG. 16 shows a fourth preferred embodiment of the signal shaping apparatus according to the present invention, comprising two stages of the main sections of FIG. 2.

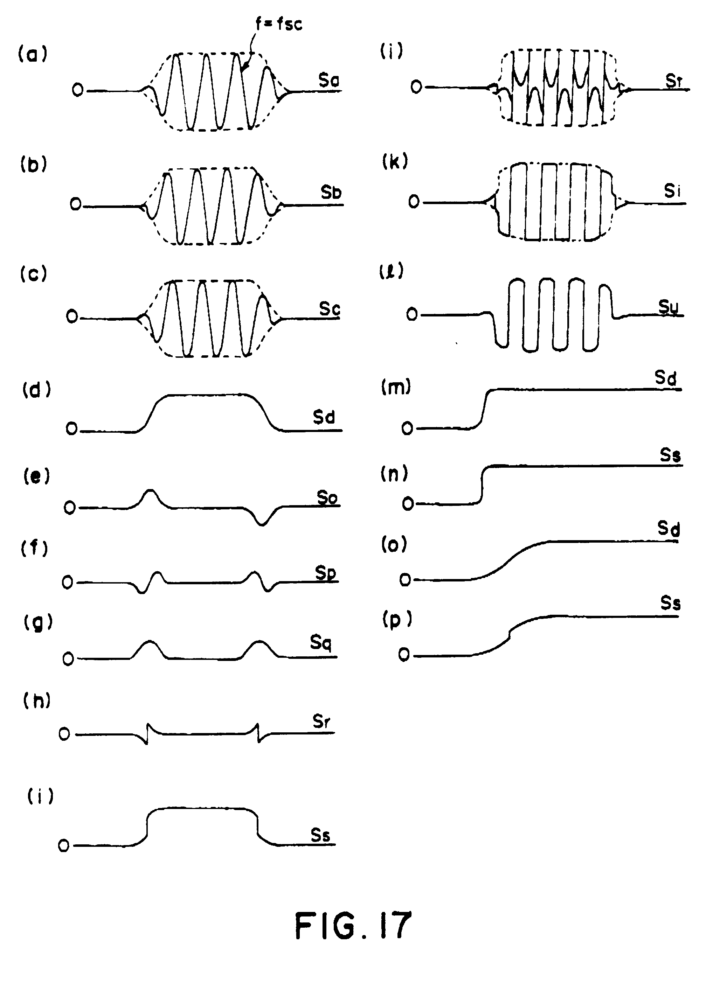

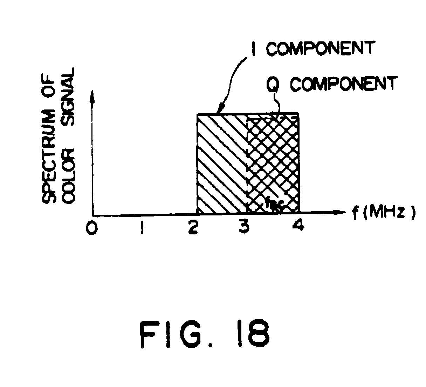

The input signal $S_a$ that coming from the line L1 is assumed a color signal being amplitude-modulated by a carrier frequency f = fsc as shown in FIG. 17(a). The color signal is, as shown in FIG. 18, a composite wave of two quadrature phase-modulated waves which is distributed over a frequency range of 2 to 4 MHz with the color subcarrier (the color subcarrier fsc being about 3.58 MHz). In FIG. 18, I and Q components are respectively orange and cyan system and green and magenta system.

The input signal $S_a$ is supplied to the orthogonal highpass filter 1 the frequency characteristics of which is shown in FIG. 4(a), fsc being employed instead of $f_2$. The orthogonal highpass filter 1 outputs the signal $S_b$ (a first orthogonal signal), shown in FIG. 17(b), which has the waveform of the carrier of the input signal $S_a$ being delayed by a 90 phase.

The input signal $S_a$ is also supplied to the in-phase highpass filter 2, the frequency characteristics of which is shown in FIG. 4(c), fsc being employed instead of $f_2$. The in-phase highpass filter 2 outputs the signal $S_c$ (a first in-phase signal), shown in FIG. 17(c), which has the same waveform and the same phase as the input signal $S_a$.

The signals $S_b$ and $S_c$ are supplied to the signal composer 3 to output the signal $S_d$ (a first envelope signal) shown in FIG. 17(d) having the same waveform as depicted by dot lines in FIGS. 17(a) to 17(c).

The signal $S_d$ is supplied to an orthogonal highpass filter 12 having the same frequency characteristics as that of the orthogonal highpass filter 1. The orthogonal highpass filter 12 outputs a signal $S_o$ (a second orthogonal signal), shown in FIG. 17(e), which has a waveform like the signal $S_d$ being differentiated.

The signal $S_d$ is also supplied to an in-phase highpass filter 13 having the same frequency characteristics as that of the in-phase highpass filter 2. The in-phase highpass filter 13 outputs a signal $S_p$ (a second in-phase signal) shown in FIG. 17(f).

The signals $S_o$ and $S_p$ are supplied to a signal composer 14, equivalent to the signal composer 3, which outputs a signal $S_q$ (a second envelope signal) which is the square root of the sum of the two signals in accordance with the following equation (25).

$$S_q = \sqrt{S_o{}^2 + S_p{}^2} \tag{25}$$

The signals $S_p$ and $S_q$ are supplied to a waveform shaper 15 which outputs a signal $S_{p1}$ (not shown in FIG. 17) in accordance with the following equations (26) and (27).

$$S_{p1} = \text{sgn}\,(S_p) * S_q \tag{26}$$

$$S_{p1} = \begin{cases} S_q & (0 \leq S_p) \\ -S_q & (S_f < 0) \end{cases} \quad \cdots \quad (27)$$

The signal $S_{p1}$ has the same amplitude as that of the signal $S_q$ and its polarity reversible by a negative polarity of the signal $S_p$.

A subtractor 16 subtracts the signal $S_p$ from the signal $S_{p1}$ to output a signal $S_r$ (a first edge emphasis signal) shown in FIG. 17(h). The signal $S_r$ has a waveform the polarity of which is inverted at the timing of the mid portions of the transition portions of the signal $S_d$. The signal $S_r$ is thus the edge emphasis component of the signal $S_d$.

The output signal $S_r$ of the subtracter 16 is supplied to an adder 17 and then added to the signal $S_d$. The adder outputs $S_s$ shown in FIG. 17(i) which has the waveform like the mid portions of the transition portions of the signal $S_d$ becoming steep.

The signals $S_s$ and $S_c$ are supplied to the waveform shaper 4 which outputs a signal $S_{c1}$ (not shown in FIG. 17) in accordance with the following equations (28) and (29).

$$S_{c1} = \text{sgn}\,(S_c) * S_s \tag{28}$$

$$S_{c1} = \begin{cases} S_s & (0 \leq S_c) \\ -S_s & (S_c < 0) \end{cases} \quad \cdots \quad (29)$$

The subtractor 5 subtracts the signal $S_c$ from the signal $S_{c1}$ to output a signal $S_t$ (a second edge emphasis signal) shown in FIG. 17(j). The signal $S_t$ is to edge-emphasize the carrier included in the signal $S_c$. The envelope depicted by dot lines in FIG. 17(j) has the same waveform as that of the signal $S_s$. The signal $S_t$ thus includes the edge emphasis component of the envelope of the input signal $S_a$.

The adder 6 adds the signal $S_t$ to the input signal $S_a$ to output a signal $S_i$ shown in FIG. 17(k).

Compared to the input signal $S_{a'}$ the carrier included in the output signal $S_i$ is reshaped in rectangular wave and the transition portions of the envelope become steep. This results in adequate edge emphasis.

As shown in FIGS. 17(m) to 17(p) and described before, the edge emphasis of the signal $S_a$ which is the envelope of the signal $S_i$ depends on the frequency characteristics of the edge portions of the signal $S_d$ which is the envelope of the input signal $S_a$ before edge-emphasizing.

The edge emphasis can be controlled by decreasing an output level of the signal $S_t$ (the second edge emphasis signal) or providing a filter for rejecting side-band components not required from the output signal $S_i$. An edge emphasis-controlled signal $S_u$ is shown in FIG. 17($\ell$).

As to the frequency characteristics, those shown in FIGS. 4(a) and 4(c) are respectively applied to the orthogonal highpass filters 1 and 12 and in-phase highpass filters 2 and 13. Those shown in FIGS. 4(e) and 4(f) however may be respectively applied to the orthogonal highpass filters 1 and 12 and in-phase highpass filters 2 and 13, fsc being employed instead of $f_2$. The frequency characteristics shown in FIGS. 4(e) and 4(f) are respectively expressed by the following equations (30) and (31).

$$I(f) = j\, f/fsc \qquad (fsc = 3.58 \text{ MHz}) \tag{30}$$

$$R(f) = |f/fsc| \tag{31}$$

The frequency characteristics shown in FIGS. 4(a), 4(c), 4(e) and 4(f) may be respectively applied to the orthogonal highpass filter 1, in-phase highpass filter 2, orthogonal highpass filter 12 and in-phase highpass filter 13.

Furthermore, if the bandwidth of the color signal is adequately maintained, the input signal $S_a$ may be passed through the in-phase highpass filter 2 with canceling the frequency characteristics shown in FIG. 4(c).

As described above, the edge emphasis can be performed not only on the transition portions of the input signal $S_a$ but also the carrier thereof. The signal $S_i$ added with frequency components outside the band width of the signal $S_a$ can be obtained, so that color running of a reproduced image which may occur when the bandwidth of the color signal is narrowed can be prevented.

In addition, each of the elements configuring the present invention can be configured from combinations of conventional circuits and so it is possible to easily realize the present invention and therefore to have a wide range of uses.

Moreover, in the above description, the input signal can be the luminance signal, the color signal of the TV signal, or primary color signals for each of the RGB colors.

The uses of the signal shaping apparatus of the present invention are not limited to TV receivers, as the present invention can find application in video tape recorders (VTR), printers and other types of video apparatus, various types of image processing apparatus used for performing the recognition, measurement, quantification, diagnosis and other operations for images. Application to data communications apparatus is also possible in order to improve the eye pattern.

## Claims

1. A signal shaping apparatus for emphasizing the rise and the fall of an input signal ($S_a$) which has signal components in a frequency bandwidth set beforehand, comprising:

first filter means (1) for delaying by a 90° phase said signal components and outputting the 90° phase-delayed signal components as a first signal ($S_b$), wherein the closer said signal components to the upper limit frequency of said frequency bandwidth, the less said signal components are attenuated;

second filter means (2) for outputting said signal components as a second signal ($S_c$), wherein the closer said signal components to the upper limit frequency of said frequency bandwidth, the less said signal components are attenuated;

signal composition means (3) for performing vector composition of said first and second signals and for outputting a third signal ($S_d$) having an amplitude which is the square root of the sum of the squares of the amplitudes of said first and second signals;

signal shaping means (4) for outputting a fourth signal ($S_{d'}$) which is said third signal being phase-reversed when said second signal is negative;

signal subtraction means (5) for subtracting said second signal from said fourth signal to output rise/fall emphasis components ($S_e$) of said input signal; and

signal addition means (6) for adding said emphasis components to said input signal to emphasize rise/fall of said input signal.

2. An apparatus according to claim 1, further comprising:

third filter means (8) for delaying by a 90° phase said third signal and outputting the 90° phase-delayed signal as a fifth signal ($S_f$), wherein the closer the third signal's components to the upper limit frequency of said frequency bandwidth, the less they are attenuated;

control signal generation means (9), responsive to said third and fifth signals, for outputting a control signal ($S_g$) representative of a rise or fall of said input signal and determined by judging the ratio of said third and fifth signals; and

switching means (7), responsive to the control signal, for allowing or disabling said rise/fall emphasis components to be added to said input signal by said signal addition means.

3. An apparatus according to claim 1, further comprising signal limiting means (10), responsive to said second signal, for passing said second signal therethrough and transferring said second signal to said signal shaping means and signal subtraction means only if said second signal is equal to or greater than a reference signal ($\alpha$).

4. An apparatus according to claim 1, further comprising signal limiting means (11), responsive to said rise/fall emphasis components, for passing said emphasis components therethrough and transferring said emphasis components to said signal addition means if the absolute value of said emphasis components is equal to or greater than a reference signal ($\beta$).

5. A signal shaping apparatus for emphasizing the rise and the fall of an input signal ($S_a$) which has signal components in a frequency bandwidth set beforehand, comprising:

first filter means (1) for delaying by a 90° phase said signal components and outputting the 90° phase-delayed signal components as a first signal ($S_b$), wherein the closer said signal components to the upper limit frequency of said frequency bandwidth, the less said signal components are attenuated;

second filter means (2) for outputting said signal components as a second signal ($S_c$), wherein the closer said signal components to the upper limit frequency of said frequency bandwidth, the less said signal components are attenuated;

first signal composition means (3) for performing vector composition of said first and second signals and outputs a third signal ($S_d$) having an amplitude which is the square root of the sum of the squares of amplitudes of said first and second signals;

third filter means (12) for delaying by a 90° phase said third signal and outputting the 90° phase-delayed signal as a fourth signal ($S_o$), wherein the closer the third signal's components to the upper limit frequency of said frequency bandwidth, the less they are attenuated;

fourth filter means (13) for outputting said third signal as a fifth signal ($S_p$), wherein the closer the third signal's components to the upper limit frequency of said frequency bandwidth, the less they are attenuated;

second signal composition means (14) for performing vector composition of said fourth and fifth signal and for outputting a sixth signal ($S_q$) having an amplitude which is the square root of the sum of the squares of the amplitudes of said fourth and fifth signals;

first signal shaping means (15) for outputting a seventh signal ($S_{p1}$) which is said sixth signal being phase-reversed when said fifth signal is negative;

first signal subtraction means (16) for subtracting said fifth signal from said seventh signal to output first rise/fall emphasis components ($S_r$) of said input signal;

first signal addition means (17) for adding said first emphasis components to said third signal to output an eighth signal ($S_s$);

second signal shaping means (4) for outputting a ninth signal ($S_{c1}$) which is said eighth signal being phase-reversed when said second signal is negative;

second signal subtraction means (5) for subtracting said second signal from said ninth signal to output second rise/fall emphasis components ($S_t$) of said input signal; and

second signal addition means (6) for adding said second emphasis components to said input signal to emphasize rise/fall of said input signal.

**Patentansprüche**

1.  Signalformende Vorrichtung zum Hervorheben des Anstiegs und des Abfalls eines Eingangssignals ($S_a$), welches Signalkomponenten in einem vorab festgelegten Frequenzband aufweist, umfassend:

    eine erste Filtereinrichtung (1), die diese Signalkomponenten um eine Phase von 90 Grad verzögert und die um 90 Grad phasenverzögerten Signalkomponenten als ein erstes Signal ($S_b$) ausgibt, wobei diese Signalkomponenten um so weniger geschwächt werden, je dichter sie an der oberen Grenzfrequenz dieser Frequenzbandbreite liegen;
    eine zweite Filtereinrichtung (2), die die Signalkomponenten als ein zweites Signal ($S_c$) ausgibt, in welcher diese Signalkomponenten um so weniger geschwächt werden, je dichter die Signalkomponenten an der oberen Grenzfrequenz dieser Frequenzbandbreite liegen;
    eine Signalzusammensetzungseinrichtung (3), die eine Vektorzusammensetzung des ersten und zweiten Signals vornimmt und ein drittes Signal ($S_d$) ausgibt, welches eine Amplitude aufweist, die die Quadratwurzel der Summe der Quadrate der Amplituden des ersten und zweiten Signals ist;
    eine signalformende Einrichtung (4), die ein viertes Signal ($S_d'$) ausgibt, welches, wenn das zweite Signal negativ ist, das dritte Signal mit umgekehrter Phase ist;
    eine Signalsubtraktionseinrichtung (5), die das zweite Signal vom vierten Signal subtrahiert, um Anstiegs/Abfallemphasis-Komponenten ($S_e$) dieses Eingangssignals auszugeben; und
    eine Signaladditionseinrichtung (6), die die Emphasis-Komponenten zum Eingangssignal hinzuaddiert, um den Anstieg/Abfall des Eingangssignals hervorzuheben.

2.  Vorrichtung nach Anspruch 1, ferner aufweisend:

    eine dritte Filtereinrichtung (8), die das dritte Signal um eine 90-Grad-Phase verzögert und das um 90 Grad phasenverschobene Signal als ein fünftes Signal ($S_f$) ausgibt, wobei diese dritten Signalkomponenten um so weniger geschwächt werden, je dichter sie an der oberen Grenzfrequenz der Frequenzbandbreite liegen;
    eine Steuersignal-Erzeugungseinrichtung (9), die auf das dritte und fünfte Signal anspricht, um ein Steuersignal ($S_g$) zu erzeugen, das repräsentativ für einen Anstieg oder Abfall dieses Eingangssignals ist und dadurch ermittelt wird, daß das Verhältnis des dritten und fünften Signals beurteilt wird; und
    eine Schalteinrichtung (7), die abhängig vom Steuersignal die Addtion der Anstiegs/Abfallemphasis-Komponenten zum Eingangssignal durch die Signaladditionseinrichtung zuläßt oder verhindert.

3.  Vorrichtung nach Anspruch 1, ferner aufweisend eine Signalbegrenzungseinrichtung (10), die auf das zweite Signal anspricht, um das zweite Signal hindurchzulassen und das zweite Signal der signalformenden Einrichtung und Signalsubtraktionseinrichtung nur dann zuzuführen, falls das zweite Signal gleich oder größer als ein Bezugssignal ($\alpha$) ist.

4.  Vorrichtung nach Anspruch 1, ferner aufweisend eine Signalbegrenzungseinrichtung (11), die abhängig von den Anstieg/Abfallemphasiskomponenten die Emphasiskomponenten hindurchläßt und die Emphasiskomponenten der Signaladditionseinrichtung zuführt, falls der Absolutwert der Emphasis-komponenten gleich oder größer als ein Bezugssignal ($\beta$) ist.

5.  Signalformende Vorrichtung zur Hervorhebung des Anstiegs und des Abfalls eines Eingangssignals ($S_a$), welches Signalkomponenten in einem vorab festgelegten Frequenzkanal aufweist, umfassend:

    eine erste Filtereinrichtung (1), die diese Signalkomponenten um eine Phase von 90 Grad verzögert und die um 90 Grad phasenverzögerten Signalkomponenten als ein erstes Signal ($S_b$) ausgibt, wobei diese Signalkomponenten um so weniger geschwächt werden, je dichter sie an der oberen Grenzfrequenz dieser Frequenzbandbreite liegen;

eine zweite Filtereinrichtung (2), die die Signalkomponenten als ein zweites Signal ($S_c$) ausgibt, in welcher diese Signalkomponenten um so weniger geschwächt werden, je dichter die Signalkomponenten an der oberen Grenzfrequenz dieser Frequenzbandbreite liegen;

eine erste Signalzusammensetzungseinrichtung (3), die eine Vektorzusammensetzung des ersten und zweiten Signals vornimmt und ein drittes Signal ($S_d$) ausgibt, welches eine Amplitude aufweist, die die Quadratwurzel der Summe der Quadrate der Amplituden des ersten und zweiten Signals ist;

eine dritte Filtereinrichtung (12) zum Verzögern des dritten Signals um eine Phase von 90 Grad und zur Ausgabe des 90-Grad-phasenverschobenen Signals als eines vierten Signals ($S_o$), wobei die dritten Signalkomponenten umso weniger geschwächt werden, je dichter sie an der oberen Grenzfrequenz dieser Frequenzbandbreite liegen;

eine vierte Filtereinrichtung (13) zur Ausgabe des dritten Signals als eines fünften Signals ($S_p$), wobei die dritten Signalkomponenten um so weniger geschwächt werden, je dichter sie an der oberen Grenzfrequenz der Frequenzbandbreite liegen;

eine zweite Signalzusammensetzungseinrichtung (14), die eine Vektorzusammensetzung des vierten und fünften Signals vornimmt und ein sechstes Signal ($S_q$) ausgibt, welches eine Amplitude aufweist, die die Quadratwurzel der Summe der Quadrate der Amplituden des vierten und fünften Signals ist;

eine erste signalformende Einrichtung (15), die ein siebtes Signal ($S_{p1}$) ausgibt, das, wenn das fünfte Signal negativ ist, das sechste Signal mit invertierter Phase ist;

eine Signalsubtraktions-Einrichtung (16) zur Subtraktion des fünften Signals vom siebten Signal, um erste Anstiegs/Abfallemphasiskomponenten ($S_r$) des Eingangssignals auszugeben;

eine erste Signaladditions-Einrichtung (17) zur Addition der ersten Emphasiskomponenten zum dritten Signal zur Ausgabe eines achten Signals ($S_s$);

eine zweite signalformende Einrichtung (4) zur Ausgabe eines neunten Signals ($S_{c1}$), das, wenn das zweite Signal negativ ist, das achte Signal mit umgekehrter Phase ist;

eine zweite Signalsubtraktions-Einrichtung (5) zur Subtraktion des zweiten Signals vom neunten Signal, um zweite Anstiegs/Abfallemphasiskomponenten ($S_t$) des Eingangssignals auszugeben; und

eine zweite Signaladditions-Einrichtung (6) zur Addition der zweiten Emphasiskomponenten zum Eingangssignal zur Hervorhebung des Anstiegs/Abfalls von diesem Eingangssignal.

## Revendications

1. Un appareil de configuration de signaux pour accentuer la montée et la descente d'un signal d'entrée ($S_a$) qui possède des composantes dans une largeur de bande de fréquences fixée au préalable comprenant:

un premier moyen de filtre (1) pour retarder d'une phase de 90° lesdites composantes du signal et produire comme premier signal ($S_b$) les composantes du signal retardées en phase de 90°, lesdites composantes du signal étant d'autant moins atténuées que lesdites composantes du signal sont plus proches de la fréquence limite supérieure de ladite largeur de bande de fréquences;

un deuxième moyen de filtre (2) pour produire comme deuxième signal ($S_c$) lesdites composantes du signal, lesdites composantes du signal étant d'autant moins atténuées que lesdites composantes du signal sont plus proches de la fréquence limite supérieure de ladite largeur de bande de fréquences;

un moyen de composition (3) de signaux pour effectuer une composition vectorielle desdits premier et deuxième signaux et pour produire un troisième signal ($S_d$) dont l'amplitude est la racine carrée de la somme des carrés des amplitudes desdits premier et deuxième signaux;

un moyen de configuration (4) de signaux pour produire un quatrième signal ($S_{d'}$) qui est ledit troisième signal soumis à une inversion de phase lorsque ledit deuxième signal est négatif;

un moyen de soustraction (5) de signaux pour soustraire dudit quatrième signal ledit deuxième signal pour produire des composantes dudit signal d'entrée à accentuation de montée/de descente; et

un moyen d'addition (6) de signaux pour additionner audit signal d'entrée lesdites composantes à accentuation pu accentuer la montée/la descente dudit signal d'entrée.

2. Un appareil selon la revendication 1, qui comprend en outre:

un troisième moyen de filtre (8) pour retarder d'une phase de 90° ledit troisième signal et produire comme cinquième signal ($S_f$) le signal retardé en phase de 90°, lesdites composantes du troisième signal étant d'autant moins atténuées qu'elles sont plus proches de la fréquence limite supérieure de ladite largeur de bande de fréquences;

un moyen de génération (9) de signaux de commande, qui répond auxdits troisième et cinquième signaux pour produire un signal de commande ($S_g$) représentatif d'une montée ou d'une descente dudit signal d'entrée et déterminé en évaluant le rapport entre lesdits troisième et cinquième signaux; et

un moyen de commutation (7), qui répond au signal de commande pour permettre ou invalider une addition audit signal d'entrée, par ledit moyen d'addition de signaux, desdites composantes à accentuation de montée/ de descente.

3. Un appareil selon la revendication 1, qui comprend en outre une moyen limiteur (10) de signaux, qui répond audit deuxième signal pour laisser passer à traverser lui ledit deuxième signal et transférer ledit deuxième signal audit moyen de configuration de signaux et audit moyen de soustraction de signaux seulement si ledit premier signal est égal ou supérieur à un signal de référence ($\alpha$).

4. Un appareil selon la revendication 1, qui comprend en outre une moyen limiteur (11) de signaux, qui répond auxdites composantes à accentuation de montée/ de descente pour laisser passer à travers lui lesdites composantes à accentuation et transférer lesdites composantes à accentuation audit moyen d'addition de signaux si la valeur absolue desdites composantes à accentuation est égale ou supérieure à un signal de référence ($\beta$).

5. Un appareil de configuration de signaux pour accentuer la montée et la descente d'un signal d'entrée ($S_a$) qui possède des composantes dans une largeur de bande de fréquences fixée au préalable comprenant:

un premier moyen de filtre (1) pour retarder d'une phase de 90° lesdites composantes du signal et produire comme premier signal ($S_b$) les composantes du signal retardées en phase de 90°, lesdites composantes du signal étant d'autant moins atténuées que lesdites composantes du signal sont plus proches de la fréquence limite supérieure de ladite largeur de bande de fréquences;

un deuxième moyen de filtre (2) pour produire comme deuxième signal ($S_c$) lesdites composantes du signal, lesdites composantes du signal étant d'autant moins atténuées que lesdites composantes du signal sont plus proches de la fréquence limite supérieure de ladite largeur de bande de fréquences;

un premier moyen de composition (3) de signaux pour effectuer une composition vectorielle desdits premier et deuxième signaux et produire un troisième signal ($S_d$) dont l'amplitude est la racine carrée de la somme des carrés des amplitudes desdits premier et deuxième signaux;

un troisième moyen de filtre (12) pour retarder d'une phase de 90° ledit troisième signal et produire comme quatrième signal ($S_o$) le signal retardé en phase de 90°, lesdites composantes du troisième signal étant d'autant moins atténuées qu'elles sont plus proches de la fréquence limite supérieure de ladite largeur de bande de fréquences;

un quatrième moyen de filtre (15) pour produire comme cinquième signal ($S_p$) ledit troisième signal, lesdites composantes du troisième signal étant d'autant moins atténuées qu'elles sont plus proches de la fréquence limite supérieure de ladite largeur de bande de fréquences;

un deuxième moyen de composition (14) de signaux pour effectuer une composition vectorielle desdits quatrième et cinquième signaux et produire un sixième signal ($S_q$) dont l'amplitude est la racine carrée de la somme des carrés des amplitudes desdits quatrième et cinquième signaux;

un premier moyen de configuration (15) de signaux pour produire un septième signal ($S_{p1}$) qui est ledit sixième signal soumis à une inversion de phase lorsque ledit cinquième signal est négatif;

un premier moyen de soustraction (16) de signaux pour soustraire dudit septième signal ledit cinquième signal pour produire des premiers composantes ($S_r$) dudit signal d'entrée, à accentuation de montée/ de descente;

un premier moyen d'addition (17) de signaux pour additionner audit troisième signal lesdites premières composantes à accentuation pour produire un huitième signal ($S_s$);

un deuxième moyen de configuration (4) de signaux pour produire un neuvième signal ($S_{c1}$) qui est ledit huitième signal soumis à une inversion de phase lorsque ledit deuxième signal est négatif;

un deuxième moyen de soustraction (5) de signaux pour soustraire dudit neuvième signal ledit deuxième signal pour produire des deuxièmes composantes ($S_t$) dudit signal d'entrée à accentuation de montée/ de descente;

un deuxième moyen d'addition (6) de signaux pour additionner audit signal d'entrée lesdites deuxièmes composantes à accentuation pour accentuer la montée/ la descente dudit signal d'entrée.

FIG. 1

FIG. 2

(a) ⟶ Sa

(b) ⟶ Sb

(c) ⟶ Sc

(d) ⟶ Sd

(e) ⟶ Se

(f) ⟶ Sf

(g) ⟶ Sg --- THRESHOLD LEVEL KI

(h) ⟶ Sh

(i) ⟶ Si

(j) ⟶ Sa

(k) ⟶ Si

(l) ⟶ Sa

(m) ⟶ Si

# FIG. 3

FIG. 4(a)

FIG. 4(b)

FIG. 4(c)

FIG. 4(d)

FIG. 4(e)

FIG. 4(f)

EP 0 497 532 B1

FIG. 5(a)

FIG. 5(b)

FIG. 6

91

92

Sf ○ →

Sd ○ →

÷

Sg₁ →

COMPARATOR

→ Sg

○

( K I )

# FIG. 7

73

Se ○ →

DATA

SELECTOR

→ Sh

77

Sg

# FIG. 8

(a)

(b)

(c)

(d)

(e)

(f)

(g)

(h)

(i)

Sa

Sb

Sc

Sd

Se

Sf

Sg THRESHOLD LEVEL

Sh

Si

FIG. 9

FIG. 10

FIG. I I (a)

FIG. I I (b)

(a)　　　　　　　Sa

(b)　　　　　　　Sb

(c)　　　　　　　Sc

(d)　　　　　　　Sd

(e)　　　　　　　Sj

(f)　　　　　　　Sℓ

(g)　　　　　　　Si

(h)　　　　　　　Sa

(i)　　　　　　　Sℓ

(j)　　　　　　　Sa

(k)　　　　　　　Sℓ

# FIG. 12

FIG. 13

FIG. 14(a)

FIG. 14(b)

(a)

O ⟋‾‾‾‾‾⟍____ Sa

(b)

O ___⋀_____⋁___ Sb

(c)

O __⋁⋀_____⋁⋀__ Sc

(d)

O ___⋀_____⋀___ Sd

(e)

O ___⋁_____⋁___ Se

(f)

O ____⌐___⌐____ Sm

(g)

O ___⟋‾‾‾‾⟍___ Si

(h)

O __⟋‾‾‾‾⟍__ Sa

(i)

O __⎡‾‾‾⎤__ Si

(j)

O __⟋‾‾⟍__ Sa

(k)

O __⟋‾‾⟍__ Si

# FIG. 15

FIG. 16

EP 0 497 532 B1

FIG. 17

FIG. 18